**Europäisches Patentamt**

(19) **European Patent Office**

**Office européen des brevets**

(11) Veröffentlichungsnummer: **0 061 523**
**B1**

(12) # EUROPÄISCHE PATENTSCHRIFT

(45) Veröffentlichungstag der Patentschrift:
**17.09.86**

(21) Anmeldenummer: **81108819.4**

(22) Anmeldetag: **23.10.81**

(51) Int. Cl.⁴: **G 01 N 29/02**

(54) Ultraschall-Messsonde zur Verwendung in der Fixierstation eines nichtmechanischen Druck- oder Kopiergerätes.

(30) Priorität: **26.03.81 DE 3112003**

(43) Veröffentlichungstag der Anmeldung:
**06.10.82 Patentblatt 82/40**

(45) Bekanntmachung des Hinweises auf die Patenterteilung:
**17.09.86 Patentblatt 86/38**

(84) Benannte Vertragsstaaten:
**AT BE CH FR GB IT LI LU NL SE**

(56) Entgegenhaltungen:
**DE - B - 2 024 882**
**FR - A - 1 383 035**
**GB - A - 1 084 056**
**US - A - 3 049 810**
**US - A - 3 273 111**
**US - A - 4 023 193**
**US - A - 4 208 906**

(73) Patentinhaber: **Siemens Aktiengesellschaft Berlin und München, Wittelsbacherplatz 2, D-8000 München 2 (DE)**

(72) Erfinder: **Mair, Eduard, Allgäuer Strasse 79/II, D-8000 München 71 (DE)**

ACTORUM AG

## Beschreibung

Die Erfindung bezieht sich auf eine Ultraschall-Messsonde gemäss dem Oberbegriff des Patentanspruchs 1.

Durch die US-PS 3 049 810 ist bekannt, die auf einer Papierbahn aufgebrachten Tonerbilder in einer Fixierstation einer Druck- oder Kopiervorrichtung mit Hilfe von Lösungsmitteldampf zu fixieren. Der Dampf aus Freon und Methylenchlorid löst den Toner auf, so dass er in das Papier eindringen kann. Die entsprechend ausgeführte Fixierstation kann z.B. aus einem Behälter oder Gehäuse bestehen, in der eine Verdampfungsstelle angeordnet ist, durch die das Lösungsmittel in Dampfform umgewandelt wird. Die Papierbahn wird durch das Gehäuse hindurchgeführt und innerhalb des Gehäuses dem Lösungsmitteldampf ausgesetzt. Eine vor der Behälteröffnung angebrachte Kühlfalle verhindert das Entweichen von Lösungsmitteldampf in die Umgebung.

Eine einwandfreie Fixierung der Tonerbilder auf der Papierbahn wird aber nur dann erreicht, wenn der Lösungsmitteldampf eine bestimmte Konzentration hat. Aus diesem Grunde muss mit Hilfe einer Messanordnung die Konzentration des Lösungsmitteldampfes festgestellt werden.

Es ist ferner bekannt, dass die Laufzeit eines Ultraschallsignals von der Konzentration eines Dampfes in der Luft abhängt. Eine Vorrichtung zum Messen physikalischer Eigenschaften eines Mediums mit einem elektroakustischen Wandler, der sowohl zum Aussenden einer Ultraschallschwingung als auch zum Empfangen der an einem Reflektor reflektierten Ultraschallschwingung dient, ist in der DE-AS 2 024 882 beschrieben.

Zur Überwachung der Konzentration des Lösungsmitteldampfes in der Fixierstation eines Druck- oder Kopiergerätes ist in Verbindung mit der Ultraschall-Messsonde eine Auswertelogik erforderlich, die feststellt, ob die Dampfkonzentration im Sollbereich liegt, ob neues Lösungsmittel nachgeliefert und verdampft werden muss, oder ob die Abweichungen vom Sollwert so krass sind, dass das Gerät abgeschaltet werden muss.

Im Betrieb können jedoch vorübergehende Störungen auftreten, die zu einer unterschiedlichen Dichte des Fixiermitteldampfes führen, Ursachen dafür sind beispielsweise:

a) die Bildung von Schwaden durch spontanes Verdampfen beim Einspritzen von Lösungsmittel,

b) Wärmeschichtungen zwischen der erhitzten Verdampfungsstelle und der Kühlfalle,

c) Turbulenzen durch die bewegte Papierbahn.

Die zumeist kurzzeitigen und räumlich eng begrenzten Störungen der homogenen Verteilung des Lösungsmitteldampfgemisches haben auf die Fixierqualität nur einen vernachlässigbar geringen Einfluss, da sich über die längere Fixierstrecke die örtlich unterschiedliche Einwirkung des Lösungsmittels ausgleicht.

Dagegen können solche Störungen die Messungen der Dampfkonzentration und deren Auswertungen erheblich beeinträchtigen. Insbesondere können durch örtliche Schwankungen der Dampfkonzentration Beugungen der Ultraschallwelle verursacht werden, die zu Interferenzen führen. Es ist möglich, dass diese das Echo ganz oder teilweise auslöschen oder durch gegenphasige Erregung verschiedener Bereiche der schallaufnehmenden Fläche des Ultraschallwandlers die Erzeugung brauchbarer elektrischer Empfangsimpulse verhindern.

Der Erfindung liegt die Aufgabe zugrunde, eine Ultraschall-Messsonde zur Verwendung in der Fixierstation eines nichtmechanischen Druck- oder Kopiergerätes so auszubilden, dass Fehlmessungen infolge der genannten Störeinflüsse mindestens weitgehend verhindert werden.

Die Aufgabe wird erfindungsgemäss dadurch gelöst, dass die zwischen dem elektroakustischen Wandler und einem dem Wandler gegenüberstehenden Reflektor befindliche Messstrecke von einem feinmaschigen Netz umgeben ist, dessen Maschenweite wesentlich kleiner als die Wellenlänge der Ultraschallschwingung ist.

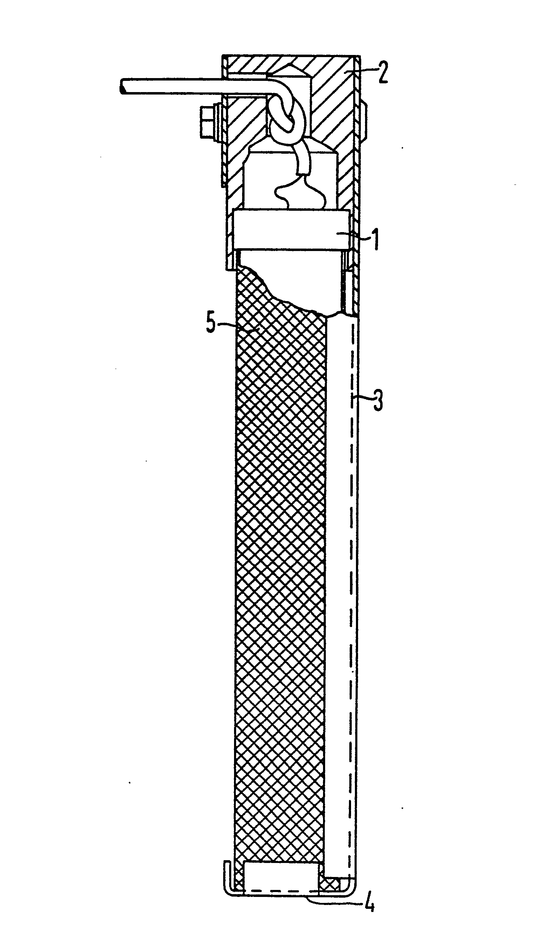

Die Erfindung wird im folgenden anhand eines in der Zeichnung dargestellten Ausführungsbeispiels näher beschrieben.

Ein Ultraschallwandler 1 ist in einem Gehäuse 2 aus einem formbeständigen, schwingungsdämpfenden Kunststoff so gelagert, dass eine möglichst geringe akustische Kopplung zwischen dem Wandler und weiteren, am Gehäuse 2 befestigten Teilen besteht. Hierbei handelt es sich insbesondere um eine in der Zeichnung nicht dargestellte Befestigungsvorrichtung für die Messsonde und um einen im wesentlichen U-förmigen Bügel 3, der am anderen Ende rechtwinklig abgebogen ist. Das abgebogene Stück bildet eine Reflektorplatte 4, an der die vom Ultraschallwandler 1 abgestrahlten Ultraschallwellen reflektiert werden und wieder zum Ultraschallwandler 1 zurückwandern. Der Abstand zwischen dem Ultraschallwandler 1 und dem Reflektor 4 beträgt beispielsweise 150 mm und definiert die Messstrecke, die von den Ultraschallsignalen zweimal durchlaufen wird. Die gesamte Messstrecke ist von einem Siebrohr 5 aus einem feinmaschigen Netz umgeben. In einer bevorzugten Ausführung besteht das Netz aus Drähten mit einem Durchmesser von etwa 0,06 mm, die so miteinander verwebt sind, dass Öffnungen von etwa 0,025 mm Kantenlänge entstehen. Dadurch ergibt sich eine offene Siebfläche von ca. 10%. Dieser Wert ist ein Kompromiss, um zu erreichen, dass einerseits die Dampfkonzentration im Inneren des Siebrohres 5 ausreichend rasch Veränderungen der durchschnittlichen Konzentration im Aussenraum folgt und anderseits der Innenraum vor kurzzeitigen und örtlich begrenzten Konzentrationsschwankungen möglichst gut abgeschirmt wird. Durch eine Beugung des Schallfeldes in der Messstrecke verursachte Interferenzerscheinungen sind dann kaum mehr zu beobachten. Zudem blendet das Siebrohr 5 Falschechosignale aus der Umgebung weitgehend aus.

## Patentansprüche

1. Ultraschall-Messsonde zur Verwendung in der Fixierstation eines nichtmechanischen Druck- oder Kopiergerätes, mit einem elektroakustischen Wandler sowohl zum Aussenden einer Ultraschallschwingung als auch zum Empfangen der an einem Reflektor reflektierten Ultraschallschwingung, dadurch gekennzeichnet, dass die zwischen dem elektroakustischen Wandler (1) und dem Reflektor (4) befindliche Ultraschall-Messstrecke von einem feinmaschigen Netz (5) umgeben ist, dessen Maschenweite wesentlich kleiner als die Wellenlänge der Ultraschallschwingung ist.

2. Ultraschall-Messsonde nach Anspruch 1, dadurch gekennzeichnet, dass das Netz des Siebrohres (5) aus Drähten mit einem Durchmesser von etwa 0,06 mm besteht, die so miteinander verwebt sind, dass eine offene Siebfläche von ca. 10% erreicht wird.

3. Ultraschall-Messsonde nach Anspruch 1 oder 2, dadurch gekennzeichnet, dass die Länge der Messstrecke etwa 150 mm beträgt.

## Claims

1. An ultrasonic sensor for use in the fixing station of a non-mechanical printing or copying apparatus, having an electro-acoustic transducer for both emitting an ultrasonic vibration and receiving the ultrasonic vibration reflected from a reflector, characterised in that the ultrasonic measuring section which is arranged between the electro-acoustic transducer (1) and the reflector (4), is surrounded by a fine-mesh net (5), the mesh size of which is substantially smaller than the wavelength of the ultrasonic vibration.

2. An ultrasonic sensor as claimed in Claim 1, characterised in that the netting of the screening tube (5) consists of wires which have a diameter of approximately 0.06 mm and which are interwoven in such manner that an open screen area of approximately 10% is obtained.

3. An ultrasonic sensor as claimed in Claim 1 or Claim 2, characterised in that the length of the measuring section is about 150 mm.

## Revendications

1. Sonde de mesure ultrasonore destinée à être utilisée dans le poste de fixage d'un appareil d'impression ou de copiage non mécanique, comportant un transducteur électroacoustique aussi bien pour l'émission d'une vibration ultrasonore que pour la réception de la vibration ultrasonore réfléchie sur un réflecteur, caractérisée par le fait que la voie de mesure ultrasonore, qui est située entre le transducteur électro-acoustique (1) et le réflecteur (4), est entourée par un réseau à mailles fines dont la largeur est inférieure à la longueur d'onde de la vibration ultrasonore.

2. Sonde de mesure ultrasonore suivant la revendication 1, caractérisée par le fait que le réseau du tamis tubulaire (5) est constitué par des fils possédant un diamètre d'environ 0,06 mm, qui sont tissés de manière à fournir une surface ouverte de tamis d'environ 10%.

3. Sonde de mesure ultrasonique suivant la revendication 1 ou 2, caractérisée par le fait que la longueur de la voie de mesure est égale à environ 150 mm.